# FASCICULE DE BREVET EUROPEEN

(11) **EP 2 394 541 B1**
(45) Date de publication et mention de la délivrance du brevet: **14.03.2018**
(21) Numéro de dépôt: 11305576.8
(22) Date de dépôt: 12.05.2011
(51) Int. Cl.: A47J 31/36

(54) **Dispositif d'infusion avec controle de la quantite de mouture et machine a cafe comportant un tel dispositif**
Brühvorrichtung mit Kontrolle der Kaffeepulvermenge, und mit einer solchen Vorrichtung ausgestattete Kaffeemaschine
Brewing device with control of the amount of grinds and coffee-maker comprising such a device

(30) Priorité: 08.06.2010 FR 1054502
(43) Date de publication de la demande: 14.12.2011
(73) Titulaire: SEB S.A., 69130 Ecully (FR)
(72) Inventeur: Vitel, Arnaud, 53240, Andouille (FR); Lebuffe, Gilles, 50890, Conde Sur Vire (FR); Gailhard, Thierry, 69970, Chaponnay (FR)
(74) Mandataire: Bourrières, Patrice

(56) Documents cités:
- EP-A1- 0 521 561
- EP-A1- 0 559 620
- FR-A1- 2 594 671
- US-A- 5 495 793
- US-A1- 2005 193 891

## Description

La présente invention se rapporte à un dispositif d'infusion pour machine à café du type expresso, en particulier un dispositif d'infusion dans lequel une quantité de mouture introduite dans une chambre d'infusion est contrôlée à chaque cycle pour garantir un résultat répétitif pour un type de boissons sélectionné.

La quantité de mouture à introduire dans la chambre d'infusion peut être variable pour permettre d'obtenir des boissons différentes notamment café serré appelé ristretto, café expresso, café long ...

Habituellement, le dispositif d'infusion d'une machine à café comporte une chambre d'infusion alimentée en mouture et un piston presseur comprimant la mouture dans la chambre d'infusion en une galette. Généralement, la mouture est produite par un broyeur de café muni de meules dont une est entraînée en rotation. La quantité de mouture délivrée correspond à un temps d'entraînement de la meule mémorisé dans un circuit de commande. Cependant, plusieurs paramètres peuvent faire varier la quantité de mouture délivrée pour un même temps d'entraînement de la meule, notamment l'usure des meules ou la dureté des grains de café.

Pour mesurer cette dérive, il est connu d'ajouter un dispositif de mesure de l'épaisseur de la galette de mouture comprimée représentative de la quantité de mouture introduite dans la chambre d'infusion. L'épaisseur de la galette de mouture est calculée à partir de la mesure de la position de tassage du piston presseur dans la chambre d'infusion.

Ainsi, on connaît du document EP0627186 un appareil pour préparer des boissons comportant un dispositif d'infusion comprenant une chambre d'infusion recevant la mouture et un piston presseur qui est déplacé axialement par un moteur électrique d'une position d'attente à l'extérieur de la chambre vers une position de tassage à l'intérieur de la chambre. Un capteur associé à un dispositif de contrôle permet de calculer la position de tassage du piston dans la chambre en comptant le nombre de tours réalisé par le moteur. Le capteur peut être un capteur à effet Hall associé à plusieurs aimants entraînés en rotation ou un capteur optique associé à un disque à fentes entraîné en rotation par le moteur. La position de tassage du piston peut alors être comparée à une valeur prédéterminée, un écart entre ces deux valeurs pouvant indiquer une quantité trop faible ou trop importante de mouture présente dans la chambre.

Cependant, dans cette construction, les capteurs et les éléments mobiles associés sont chers et sophistiqués et peuvent être à l'origine de pannes. Notamment, un capteur optique est sensible aux salissures dans l'ambiance d'une machine à café expresso.

On connaît également du document EP0559620 un dispositif d'infusion comprenant une chambre d'infusion pivotante entre une position de réception de la mouture et une position de tassage où l'axe de la chambre est aligné avec un piston presseur. Le piston presseur est déplacé axialement par un moteur électrique d'une position d'attente à l'extérieur de la chambre vers une position de tassage à l'intérieur de la chambre. Un capteur associé à un dispositif de contrôle permet de calculer la position de tassage du piston dans la chambre en comptant le nombre de tours réalisé par le moteur. Le capteur peut être un capteur incrémental associé à un disque rotatif entraîné par le moteur. En variante, un potentiomètre linéaire connecté au piston presseur peut être utilisé.

Même si l'utilisation d'un potentiomètre linéaire parait plus économique que la mise en oeuvre des autres capteurs cités, il n'en reste pas moins un composant cher, volumineux et difficile à implanter en automatique sur une carte électronique. L'utilisation d'un potentiomètre linéaire ne parait envisageable que dans le cas d'un dispositif d'infusion avec une course du piston presseur réduite, ce qui nécessite de combiner au déplacement du piston presseur un mouvement de la chambre pour le chargement de la mouture. Ainsi, la mécanique du dispositif d'infusion se trouve considérablement compliquée. De plus, le potentiomètre linéaire ayant une course longue, l'étanchéité d'un composant standard risque de poser des problèmes de fiabilité dans l'ambiance d'une machine à café.
Le but de la présente invention est de remédier aux inconvénients précités et de proposer un dispositif d'infusion permettant de contrôler la quantité de mouture introduite dans une chambre d'infusion de manière précise qui soit de conception simple et économique à mettre en oeuvre.
Un autre but de la présente invention est de proposer, un dispositif d'infusion qui fonctionne de manière fiable.
Un autre but de l'invention est de proposer une machine à café du type expresso comportant un dispositif d'infusion du type précité.
Ces buts sont atteints avec un dispositif d'infusion pour machine à café du type expresso comportant une chambre d'infusion destinée à recevoir de la mouture, un piston presseur monté mobile en translation sur une course s'étendant entre une position haute de retrait pour laquelle il est situé au dessus de la chambre d'infusion et une position basse de tassage pour laquelle il pénètre dans ladite chambre d'infusion et un potentiomètre commandé par des moyens d'entraînement lors de la course du piston presseur pour permettre de mesurer la position de tassage dudit piston presseur et d'en déduire la hauteur d'une galette compactée de mouture, les moyens d'entraînement n'agissant sur le potentiomètre que sur une fraction de la course du piston presseur correspondant à la plage de mesure de la position de tassage. Dans un tel dispositif d'infusion, la partie de la course du piston presseur où sera effectuée la mesure de la position de tassage est réduite par rapport à la course totale. A titre d'exemple, la hauteur de la galette de mouture entre les deux préparations extrêmes varie de 10 à 20 millimètres, soit une plage de mesure de la position de tassage de 10 millimètres alors que la course totale du piston est supérieure à 50 millimètres.

Ainsi, en entraînant mécaniquement le potentiomètre uniquement sur une fraction de la course du piston correspondant à la plage de mesure de la position de tassage, on peut choisir un composant standard, simple, fiable et très économique tout en ayant une bonne précision de la mesure. En d'autres termes, on ajuste la plage de mesure de la position de tassage à la course utile du potentiomètre.

Avantageusement, le potentiomètre est un potentiomètre rotatif comportant un axe de rotation.

Cette disposition permet d'avoir un composant très économique, le potentiomètre rotatif étant un composant standard, fabriqué en très grande série.

De préférence, les moyens d'entraînement comportent un levier agencé sur l'axe de rotation du potentiomètre qui coopère avec une surface d'appui agencée à l'extrémité d'un bras solidaire du piston presseur.

Cette disposition permet d'obtenir une construction extrêmement simple pour la commande du potentiomètre, réalisée par exemple par 2 pièces plastiques simples.

Avantageusement, le bras solidaire du piston presseur est un bras supérieur qui entraîne le levier dans une fraction basse de la course du piston presseur jusqu'à la position de tassage et les moyens d'entraînement comportent une deuxième surface d'appui agencée à l'extrémité d'un bras inférieur solidaire du piston presseur, entraînant le levier dans une fraction haute de la course du piston presseur jusqu'à la position de retrait.

Cette disposition permet de réaliser de manière simple et économique le retour en position du potentiomètre.

De préférence, les moyens d'entraînement agissent sur le potentiomètre sur moins de la moitié de la course du piston presseur

Avantageusement, l'axe de rotation du potentiomètre comporte des moyens de freinage.

Cette disposition permet de garantir le contact entre la surface d'appui et le levier surtout dans la fraction basse de la course du piston. En effet lorsque la surface d'appui entre en contact avec le levier, sous l'effet du choc le levier pourrait se trouver propulsé vers le bas au-delà de la position d'arrêt de la surface d'appui.

De préférence, les moyens de freinage sont formés par un joint torique en élastomère agencé dans un capot disposé autour du potentiomètre, ledit joint étant ajusté au diamètre de l'axe de rotation pour induire un frottement lors de la rotation de l'axe.

Cette disposition permet d'obtenir une solution simple et économique pour réaliser le freinage de l'axe et permet également de renforcer l'étanchéité du potentiomètre.

Avantageusement, le levier et le capot comportent respectivement des butées et des excroissances de limitation de la rotation de l'axe du potentiomètre.

Les deux bras munis de leur surface d'appui forment une fourche qui emprisonne le levier du potentiomètre. Cette disposition permet de garantir le maintien de l'extrémité du levier dans cette fourche en cas de chocs anormaux sur le dispositif d'infusion soit lors du transport, soit en utilisation. Le levier de par son inertie lors de ces chocs ne peut se déplacer au-delà des butées de limitation de la rotation de l'axe du potentiomètre.

Avantageusement, le dispositif d'infusion comporte un vérin hydraulique pour l'entraînement du piston presseur.

L'invention concerne également une machine à café du type expresso comportant un dispositif d'infusion tel que précédemment décrit.

L'invention sera mieux comprise à l'étude du mode de réalisation pris à titre nullement limitatif et illustré dans les figures annexées dans lesquelles :
- La figure 1 illustre une vue en perspective d'une machine à café expresso incorporant un dispositif d'infusion selon un mode particulier de réalisation de l'invention ;
- La figure 2 illustre une vue en perspective du dispositif d'infusion de la figure 1 dont le piston presseur est illustré en position de retrait ;
- La figure 3 illustre une vue selon la direction III du dispositif d'infusion illustré sur la figure 2 ;
- La figure 4 illustre une vue de détail d'un potentiomètre du dispositif d'infusion illustré sur la figure 3 ;
- La figure 5 illustre une vue en perspective du dispositif d'infusion illustré sur la figure 2 dont le piston presseur est en position de tassage ;
- La figure 6 illustre une vue selon la direction VI du dispositif d'infusion illustré sur la figure 5.

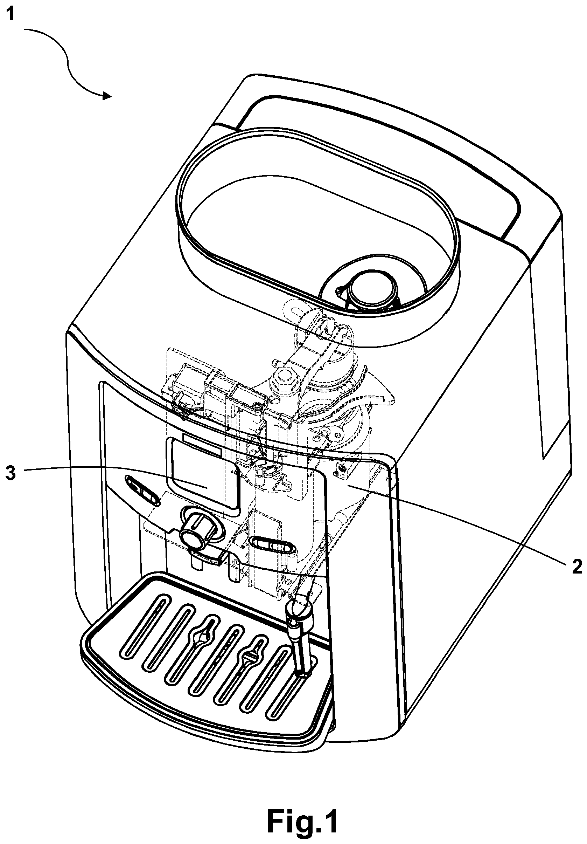

Dans l'exemple de réalisation illustré à la figure 1, un dispositif d'infusion 2 est destiné à équiper une machine à café 1 du type automatique comprenant une alimentation en eau froide, un distributeur de café en poudre provenant d'un broyeur à café intégré au distributeur (non représentés sur les figures) et un dispositif électronique de contrôle 3 pour la commande et la gestion des cycles de préparation des boissons infusées.

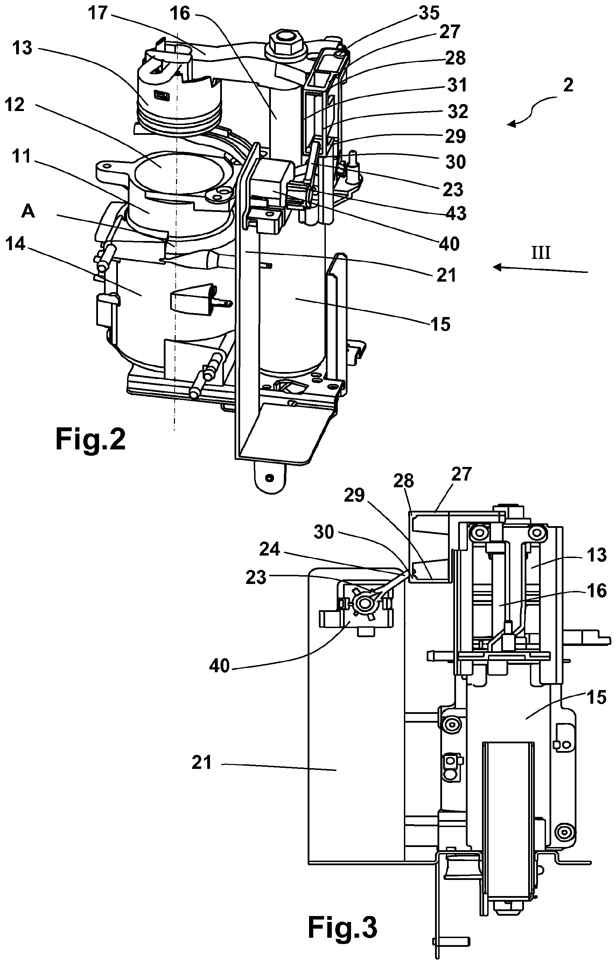

Un tel dispositif d'infusion 2 illustré aux figures 2 à 6 comprend notamment un corps 11 à axe longitudinal vertical renfermant une chambre d'infusion 12 qui est susceptible de recevoir un piston presseur 13 monté déplaçable selon l'axe A au moyen d'un mécanisme d'entraînement, des moyens de pompage (non représentés), destinés à créer une circulation d'eau et d'infusion, ainsi qu'une chaudière 14 destinée à chauffer l'eau pour la préparation de l'infusion dans la chambre d'infusion 12. Selon une caractéristique particulière de l'invention, mais non limitative, le corps 11 est agencé latéralement à un vérin hydraulique 15 à simple effet comportant une tige supérieure 16 portant un bras 17 formant potence et dont l'extrémité libre est reliée au piston presseur 13, les courses du piston presseur 13 et du vérin hydraulique étant ainsi effectuées selon des directions pratiquement parallèles. Le piston presseur 13 parcourt une course entre une position haute de retrait pour laquelle il est situé au dessus de la chambre d'infusion 12 et une position basse de tassage pour laquelle il pénètre dans la chambre d'infusion 12. Dans la position basse de tassage, le piston presseur 13 comprime la mouture admise dans la chambre d'infusion 12 pour former une galette de mouture comprimée.

La chaudière 14 et le corps 11 sont formés en une seule pièce de matériau conducteur de la chaleur qui contient une résistance électrique chauffante, des canaux de passage et de chauffage de l'eau dont des entrées sont reliées, via les moyens de pompage, à un réservoir d'eau froide et dont des extrémités débouchent sur le fond de la chambre d'infusion 12. Le piston presseur 13 présente un conduit de passage de l'infusion débouchant par un orifice de sortie, tandis que les moyens de pompage sont adaptés à créer une circulation d'eau ascendante dans la chambre d'infusion 12 vers le conduit lorsque le piston presseur 13 ferme la chambre. Un tel dispositif d'infusion 2 a par exemple été décrit plus en détail dans la demande de brevet PCT WO 99/12456.

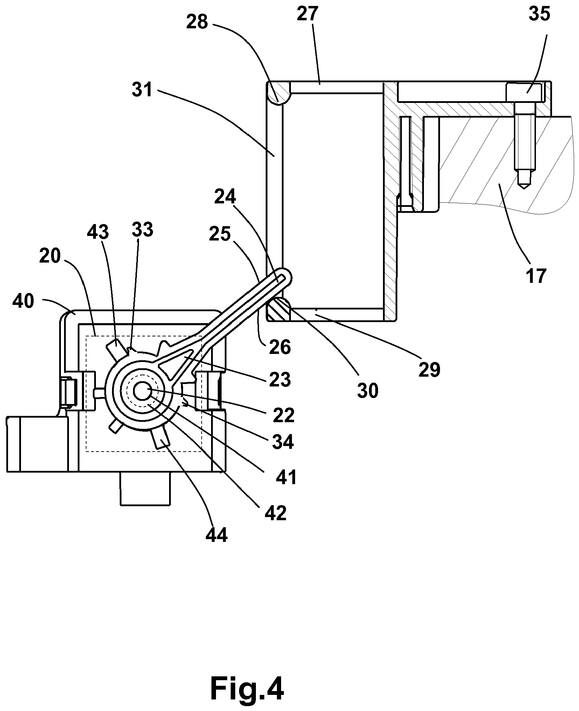

Tel qu'illustré à la figure 4, le dispositif d'infusion 2 comporte un potentiomètre 20 rotatif (représenté en traits pointillés) agencé verticalement sur un support 21, solidaire du vérin hydraulique 15. Le potentiomètre 20 comprend un axe de rotation 22 à l'extrémité duquel est agencé un levier 23 comportant une extrémité libre 24 présentant une face supérieure 25 et une face inférieure 26 (fig.4).

Le bras 17 formant potence du vérin hydraulique 15 comporte dans sa partie opposée au piston presseur 13 un bras inférieur 29 fixé par une vis 35. A l'extrémité du bras inférieur 29, est disposée transversalement une surface d'appui 30 inférieure. Le bras 17 formant potence comporte, superposé au bras inférieur 29, un bras supérieur 27 à l'extrémité duquel est disposée transversalement une surface d'appui 28 supérieure. Les surfaces d'appui 28, 30 présentent une forme cylindrique au contact de l'extrémité du levier et sont liées à leur extrémité respective par une poutre verticale 31, 32 pour former un cadre de commande. Le potentiomètre 20 est agencé pour que l'extrémité libre 24 du levier 23 soit disposée dans le cadre de commande.

Tel que visible aux figures 2 et 3, lorsque le piston presseur 13 est en position de retrait de la chambre d'infusion 12, le levier 23 occupe une position inclinée vers le haut, de l'ordre de 45° par rapport à l'horizontale, l'extrémité libre 24 reposant sur la surface d'appui 30 inférieure par la face inférieure 26.

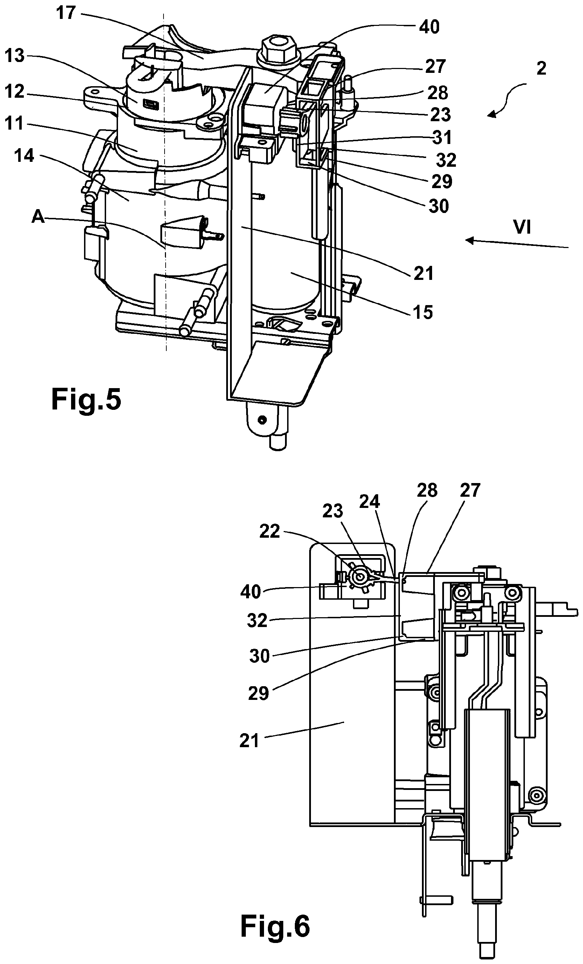

Tel que visible aux figures 5 et 6, lorsque le piston presseur 13 est en position de tassage dans la chambre d'infusion 12, le levier 23 occupe une position inclinée vers le bas, de l'ordre de 15° par rapport à l'horizontale, l'extrémité libre 24 reposant sur la surface d'appui 28 supérieure par la face supérieure 25. Par exemple, cette position du levier 23 correspond à une position de tassage du piston presseur 13 qui donne une galette de mouture comprimée d'environ 13 millimètres.

Le dispositif électronique de contrôle 3 peut, en fonction du type de boissons sélectionné par l'utilisateur, piloter le broyeur pour introduire une quantité de mouture variable dans la chambre d'infusion 12, correspondant par exemple à un temps programmé de broyage. A titre d'exemple la hauteur de la galette de mouture entre les deux préparations extrêmes du type café ristretto et café long varie de 10 à 20 millimètres, soit une plage de mesure de la position de tassage de 10 millimètres alors que la course totale du piston presseur 13 est égale à 50 millimètres. Ainsi, le cadre de commande est dimensionné pour que la distance entre la surface d'appui 30 inférieure et la surface d'appui 28 supérieure soit égale à la course totale du piston presseur 13 moins la plage de mesure. A cette distance, il faut également retirer l'épaisseur de l'extrémité libre 24 du levier 23. Soit pour une épaisseur de l'extrémité libre du levier de 4 millimètres, une distance de : 50 - 10 - 4 = 36 millimètres.
La position du potentiomètre 20 pour une galette de mouture comprimée d'une épaisseur maxi de 20 millimètres correspond à une position du levier 23 de 40° vers le haut. Pour une galette de mouture comprimée d'une épaisseur mini de 10 millimètres, la position du potentiomètre 20 correspond à une position du levier 23 de 40° vers le bas. La chambre d'infusion 12 peut comporter une butée sur laquelle le piston presseur vient en appui pour ne pas aller au-delà de l'épaisseur mini.

Ainsi, la plage de mesure de la position de tassage de 10 millimètres correspond à une rotation de l'axe du potentiomètre 20 d'environ 80 °, ce qui permet d'obtenir avec une longueur du levier 23 de 30 millimètres, une précision de la mesure de l'ordre de 0,2 millimètres.

Tel qu'illustré sur la figure 4, un capot 40 est disposé autour du potentiomètre 20. Ce capot 40 comporte une ouverture 41 munie d'une gorge dans laquelle est placé un joint torique 42 (représenté en traits pointillés) en élastomère. L'axe de rotation 22 du potentiomètre 20 est agencé dans l'ouverture 41 et le joint 42 est ajusté au diamètre de l'axe de rotation 22 pour induire un frottement lors de la rotation de l'axe.

Le capot 40 comporte une excroissance supérieure 43 et une excroissance inférieure 44. Le levier 23 comporte une butée haute 33 et une butée basse 34.

Lorsque le piston presseur 13 est en position de retrait de la chambre d'infusion 12, le levier 23 occupe une position inclinée vers le haut dans laquelle la butée haute 33 est proche du contact avec l'excroissance supérieure 43. Lorsque le piston presseur 13 est en position de tassage la plus basse possible dans la chambre d'infusion 12, le levier 23 occupe une position inclinée vers le bas dans laquelle la butée basse 34 est proche du contact avec l'excroissance inférieure 44. En fonctionnement normal les butées ne viennent pas en contact avec les excroissances.
Le potentiomètre comporte une course électrique de 230°. Dans une variante de réalisation, le potentiomètre comporte une course électrique limitée à environ 100° afin d'exploiter un maximum de précision électronique sur les 80° d'angle mécanique utilisé pour la mesure de la position du piston presseur.

En fonctionnement, l'utilisateur sélectionne et lance la préparation d'une boisson à l'aide du dispositif électronique de contrôle 3. Un temps de broyage pour produire une galette de mouture comprimée d'une hauteur théorique pour la boisson sélectionnée est en mémoire ainsi que la hauteur réelle de la galette issue du cycle précédent pour la même boisson. A partir de ces deux valeurs, le dispositif électronique de contrôle 3 va calculer un temps de broyage corrigé d'un coefficient k issu par exemple du ratio de la hauteur théorique et de la hauteur réelle. Le temps de broyage corrigé peut être issu d'un calcul plus sophistiqué prenant en compte plusieurs hauteurs réelles de cycles précédents. Une fois le temps de broyage corrigé calculé, le dispositif électronique de contrôle 3 va commander le broyeur pour alimenter la chambre d'infusion avec la quantité de mouture redéfinie.

Dés que le temps de broyage est écoulé, le vérin hydraulique 15 est alimenté et entraîne le piston presseur 13 et le cadre de commande de la position haute illustrée aux figures 2 et 3 vers la position basse illustrée aux figures 5 et 6. La surface d'appui inférieure 30 se sépare alors de la face inférieure 26 de l'extrémité libre 24 du levier 23 et descend jusqu'à ce que la surface d'appui supérieure 28 vienne en contact avec la face supérieure 25 pour entraîner l'extrémité libre 24 du levier 23 jusqu'à ce que le piston presseur 13 atteigne la position de tassage. Dans cette position de tassage, le dispositif électronique de contrôle 3 mesure le signal fourni par le potentiomètre 20 pour en déduire la hauteur de la galette de mouture comprimée qui sera mémorisée.

Une fois les opérations de réalisation et de distribution de la boisson terminées, le dispositif électronique de contrôle 3 commande le vérin hydraulique 15 pour un retour de la position basse en position haute. La surface d'appui 28 supérieure se sépare alors de la face supérieure 25 de l'extrémité libre 24 du levier 23 et monte jusqu'à ce que la surface d'appui 30 inférieure vienne en contact avec la face inférieure 26 pour entraîner l'extrémité libre 24 du levier 23 jusqu'à ce que le vérin hydraulique 15 atteigne une butée haute. Le dispositif électronique de contrôle en déduit alors le retour correct du piston presseur en position haute.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, le potentiomètre est un potentiomètre linéaire comportant un doigt de commande agencé entre les surfaces d'appui supérieure et inférieure.

Dans une autre variante de réalisation, le potentiomètre rotatif comporte un levier muni d'un ressort de rappel en position haute, solution qui ne nécessite pas de bras inférieur.

Dans une autre variante de réalisation, le potentiomètre comporte un pignon et une crémaillère est agencée solidairement au piston presseur pour entraîner le pignon sur une fraction de la course du piston presseur.

## Revendications

1. Dispositif d'infusion (2) pour machine à café du type espresso comportant une chambre d'infusion (12) destinée à recevoir de la mouture, un piston presseur (13) monté mobile en translation sur une course s'étendant entre une position haute de retrait pour laquelle il est situé au dessus de la chambre d'infusion (12) et une position basse de tassage pour laquelle il pénètre dans ladite chambre d'infusion (12) et un potentiomètre (20) commandé par des moyens d'entraînement lors de la course du piston presseur (13) pour permettre de mesurer la position de tassage dudit piston presseur et d'en déduire la hauteur d'une galette compactée de mouture, **caractérisé en ce que** les moyens d'entraînement n'agissent sur le potentiomètre (20) que sur une fraction de la course du piston presseur (13) correspondant à la plage de mesure de la position de tassage.

2. Dispositif d'infusion (2) selon la revendication 1, **caractérisé en ce que** le potentiomètre (20) est un potentiomètre rotatif comportant un axe de rotation (22).

3. Dispositif d'infusion (2) selon la revendication 2, **caractérisé en ce que** les moyens d'entraînement comportent un levier (23) agencé sur l'axe de rotation (22) du potentiomètre (20) qui coopère avec une surface d'appui (28) agencée à l'extrémité d'un bras (27) solidaire du piston presseur (13).

4. Dispositif d'infusion (2) selon la revendication 3, **caractérisé en ce que** le bras (27) solidaire du piston presseur (13) est un bras supérieur (27) qui entraîne le levier (23) dans une fraction basse de la course du piston presseur jusqu'à la position de tassage et **en ce que** les moyens d'entraînement comportent une deuxième surface d'appui (30) agencée à l'extrémité d'un bras inférieur (29) solidaire du piston presseur (13), entraînant le levier (23) dans une fraction haute de la course du piston presseur (13) jusqu'à la position de retrait.

5. Dispositif d'infusion (2) selon l'une quelconque des revendications 1 à 4, **caractérisé en ce que** les moyens d'entraînement agissent sur le potentiomètre (20) sur moins de la moitié de la course du piston presseur (13).

6. Dispositif d'infusion (2) selon l'une quelconque des revendications 2 à 5, **caractérisé en ce que** l'axe de rotation (22) du potentiomètre (20) comporte des moyens de freinage.

7. Dispositif d'infusion (2) selon la revendication 6, **caractérisé en ce que** les moyens de freinage sont formés par un joint torique (42) en élastomère agencé dans un capot (40) disposé autour du potentiomètre (20), ledit joint étant ajusté au diamètre de l'axe de rotation (22) pour induire un frottement lors de la rotation de l'axe.

8. Dispositif d'infusion (2) selon l'une des revendications 2 ou 7, **caractérisé en ce que** le levier (23) et le capot (40) comportent respectivement des butées (33, 34) et des excroissances (43, 44) de limitation de la rotation de l'axe du potentiomètre (20).

9. Dispositif d'infusion (2) selon l'une quelconque des revendications 1 à 8, **caractérisé en ce qu'**il comporte un vérin hydraulique (15) pour l'entraînement du piston presseur (13)

10. Machine à café du type espresso (1) comportant un dispositif d'infusion (2) conforme à l'une des revendications 1 à 9.

## Patentansprüche

1. Aufgussvorrichtung (2) für eine Kaffeemaschine vom Espressotyp, die eine Aufgusskammer (12), die dazu bestimmt ist, Mahlgut aufzunehmen, einen Presskolben (13), der über einen Hub verschiebbar ist, der sich zwischen einer oberen Rückzugsposition, für die er sich über der Aufgusskammer (12) befindet, und einer unteren Stampfposition erstreckt, für die er in die Aufgusskammer (12) eindringt, und ein Potentiometer (20) aufweist, das durch Antriebsmittel während des Hubs des Presskolbens (13) gesteuert wird, um es zu ermöglichen, die Stampfposition des Presskolbens zu messen, und daraus die Höhe eines kompaktierten Mahlgutkuchens abzuleiten, **dadurch gekennzeichnet, dass** die Antriebsmittel auf das Potentiometer (20) nur über einen Abschnitt des Hubs des Presskolbens (13) wirken, der dem Messbereich der Stampfposition entspricht.

2. Aufgussvorrichtung (2) nach Anspruch 1, **dadurch gekennzeichnet, dass** das Potentiometer (20) ein Drehpotentiometer ist, das eine Drehachse (22) aufweist.

3. Aufgussvorrichtung (2) nach Anspruch 2, **dadurch gekennzeichnet, dass** die Antriebsmittel einen Hebel (23) aufweisen, der auf der Drehachse (22) des Potentiometers (20) angeordnet ist, der mit einer Anschlagfläche (28) zusammenwirkt, die am Ende eines Armes (27), der einstückig mit dem Presskolben (13) ist, angeordnet ist.

4. Aufgussvorrichtung (2) nach Anspruch 3, **dadurch gekennzeichnet, dass** der Arm (27), der einstückig mit dem Presskolben (13) ist, ein oberer Arm (27) ist, der den Hebel (23) in einem unteren Abschnitt des Hubs des Presskolbens bis zu der Stampfposition antreibt, und dass die Antriebsmittel eine zweite Anschlagfläche (30) aufweisen, die am Ende eines unteren Arms (29), der einstückig mit dem Presskolben (13) ist, angeordnet ist, wobei er den Hebel (23) in einem oberen Abschnitt des Hubs des Presskolbens (13) bis zu der Rückzugsposition antreibt.

5. Aufgussvorrichtung (2) nach einem der Ansprüche 1 bis 4, **dadurch gekennzeichnet, dass** die Antriebsmittel auf das Potentiometer (20) über wenigstens die Hälfte des Hubs des Presskolbens (13) wirken.

6. Aufgussvorrichtung (2) nach einem der Ansprüche 2 bis 5, **dadurch gekennzeichnet, dass** die Drehachse (22) des Potentiometers (20) Bremsmittel aufweist.

7. Aufgussvorrichtung (2) nach Anspruch 6, **dadurch gekennzeichnet, dass** die Bremsmittel durch eine torische Dichtung (42) aus Elastomer gebildet sind, die in einer Abdeckung (40) angeordnet ist, die um das Potentiometer (20) vorgesehen ist, wobei die Dichtung an den Durchmesser der Drehachse (22) angepasst ist, um eine Reibung bei der Drehung der Achse zu induzieren.

8. Aufgussvorrichtung (2) nach einem der Ansprüche 2 oder 7, **dadurch gekennzeichnet, dass** der Hebel (23) und die Abdeckung (40) Anschläge (33, 34) bzw. Vorsprünge (43, 44) zur Begrenzung der Drehung der Achse des Potentiometers (20) aufweisen.

9. Aufgussvorrichtung (2) nach einem der Ansprüche 1 bis 8, **dadurch gekennzeichnet, dass** sie einen Hydraulikzylinder (15) zum Antrieb des Presskolbens (13) aufweist.

10. Kaffeemaschine vom Espressotyp (1), die eine Aufgussvorrichtung (2) nach einem der Ansprüche 1 bis 9 aufweist.

## Claims

1. Brewing device (2) for a coffee maker of the espresso type comprising a brewing chamber (12) intended to receive grinds, a presser piston (13) mounted mobile in translation over a stroke extending between an upper removal position for which it is located above the brewing chamber (12) and a lower tamping position for which it penetrates into said brewing chamber (12) and a potentiometer (20) controlled by means for driving during the stroke of the presser piston (13) in order to make it possible to measure the tamping position of said presser piston and to deduce therefrom the height of a compact cake of grinds, **characterised in that** the means for driving act on the potentiometer (20) only over a fraction of the stroke of the presser piston (13) corresponding to the measuring range of the tamping position.

2. Brewing device (2) according to claim 1, **characterised in that** the potentiometer (20) is a rotating potentiometer comprising an axis of rotation (22).

3. Brewing device (2) according to claim 2, **characterised in that** the means for driving comprise a lever (23) arranged on the axis of rotation (22) of the potentiometer (20) that cooperate with a bearing surface (28) arranged at the end of an arm (27) integral with the presser piston (13).

4. Brewing device (2) according to claim 3, **characterised in that** the arm (27) integral with the presser piston (13) is an upper arm (27) which drives the lever (23) in a bottom fraction of the stroke of the presser piston to the tamping position and **in that** the means for driving comprise a second support surface (30) arranged at the end of a lower arm (29) integral with the presser piston (13), driving the lever (23) in a top fraction of the stroke of the presser piston (13) to the removal position.

5. Brewing device (2) according to any of claims 1 to 4, **characterised in that** the means for driving act on the potentiometer (20) over less than half of the stroke of the presser piston (13).

6. Brewing device (2) according to any of claims 2 to 5, **characterised in that** the axis of rotation (22) of potentiometer (20) comprises means for braking.

7. Brewing device (2) according to claim 6, **characterised in that** the means for braking are formed by an O-ring seal (42) made of elastomer arranged in a cover (40) arranged around the potentiometer (20), said seal being adjusted to the diameter of the axis of rotation (22) in order to induce friction during the rotation of the axis.

8. Brewing device (2) according to one of claims 2 or 7, **characterised in that** the lever (23) and the cover (40) respectively comprise stops (33, 34) and protrusions (43, 44) for limiting the rotation of the axis of the potentiometer (20).

9. Brewing device (2) according to any of claims 1 to 8, **characterised in that** it comprises a hydraulic actuator (15) for driving the presser piston (13)

10. Coffee-maker of the espresso type (1) comprising a brewing device (2) in accordance with one of claims 1 to 9.
